# NEUE EUROPÄISCHE PATENTSCHRIFT

(11) **EP 0 123 800 B2**
(45) Veröffentlichungstag und Bekanntmachung des Hinweises auf die Entscheidung über den Einspruch: **31.05.1995**
(45) Hinweis auf die Patenterteilung: 06.05.1987
(21) Anmeldenummer: 84101523.3
(22) Anmeldetag: 14.02.1984
(51) Int. Cl.: H01R 39/41

(54) **Elektrische Maschine mit kleiner Leistung**
Low power electrical machine
Machine électrique de petite puissance

(30) Priorität: 28.03.1983 DE 19833311271
(43) Veröffentlichungstag der Anmeldung: 07.11.1984
(73) Patentinhaber: ROBERT BOSCH GMBH, D-70442 Stuttgart (DE)
(72) Erfinder: Herm, Werner, D-7580 Bühl (DE); Nitzsche, Hartmut, D-7580 Bühl (DE); Odendahl, Alfred, Dr., D-7580 Bühl (DE); Wieland, Bernd, D-7560 Gaggenau (DE)

(56) Entgegenhaltungen:
- GB-2 096 837
- DE-3 142 879
- FR-2 311 428
- Zeichnung Nr. 162.29177e betreffend Motor 1BA63
- Zeichnung 020.48052d: Bürstenhalter 1BA63
- Zeichnung 059.48094c: Dämpfungselement 1BA63
- Kontrollbericht Nr. A2143 der Fa. Bosch-Siemens Haushaltsgeräte GmbH betreffend Kollektormotor Sach-Nr. 304 7405AA7
- Aufstellung Antriebsmotoren F.VW Stand 06/73
- Prospekt SIEMENS - Waschgeräte 82

## Beschreibung

### Stand der Technik

Die Erfindung geht aus von einer elektrischen Maschine mit kleiner Leistung gemäß dem Oberbegriff des Hauptanspruchs. Durch die FR-A-23 11 428 ist ein kleiner Kollektormotor bekannt. Dieser besitzt eine Bürstenhalterplatte mit zum Kollektor seines Läufers gerichteten Schächten, innerhalb von diesen gummiartig elastiche. im wesentlichen nach Art von Rechteckrohren geformte Einsätze und innerhalb von diesen Köcher und in diesen längsverschiebbare Kohlebürsten. Die Kohlebürsten werden mittels Federn, die sich an die Schächte verschließende Kappen anlegen, gegen den Kollektor gedrückt. Die elastischen Einsätze haben die Aufgabe, die Geräusche, die durch Erschüttern der Kohlebürsten mittels des sich drehenden Kollektors entstehen, möglichst klein zu halten. Die Einsätze füllen die Zwischenräume zwischen den inneren Begrenzungsflächen der Schächte und den benachbarten äußeren Begrenzungsflächen der Köcher vollständig aus. Dies hat den Nachteil, daß selbst dann, wenn ein sehrweicher Werkstoff für die Einsätze ausgewählt ist, die Vibrationen der Kohlebürsten und der Köcher auf die Bürstenhalterplatte übertragen und von dieser als Schall abgestrahlt werden. Ein weiterer Nachteil besteht darin, daß infolge unvermeidbarer Fertigungstoleranzen die Köcher zu locker oder zu unelastisch in den Schächten sitzen. Wenn die Köcher zu locker sitzen, werden die Kohlebürsten zu schlecht geführt und ziehen deshalb Funken. Die Kohlebürsten verschleißen dadurch vorzeitig. Außerdem treten Funkstörungen auf. Sitzen die Köcher zu unelastisch innerhalb der Schächte, so werden die Vibrationen der Köcher fast ungedämpft auf die Bürstenhalterplatte übertragen und von dieser als Schall abgestrahlt. Es stellte sich deshalb die Aufgabe. die elektrische Kleinmaschine so zu verbessern, daß eine verstärkte Geräuschdämpfung mit größerer Sicherheit innerhalb der Se rienfertigung erreicht wird.

### Vorteile der Erfindung

Die elektrische Kleinmaschine mit den kennzeichnenden Merkmalen des Anspruchs 1 hat den Vorteil, daß die Köcher sehr elastisch und trotzdem spielfrei gehalten werden. ohne daß enge Fertigungstoleranzen für die Köcher, die Einsätze und die Schächte nötig sind. Dadurch werden nur sehr wenig Vibrationen von den Kohlebürsten über die Köcher und die Einsätze auf die Bürstenhalterplatte übertragen. Demzufolge strahlen die Bürstenhalterplatte und Köcher weniger Geräusch an die Umgebung ab. Deshalb können solche elektrischen Maschinen näher bei Benützern sowie mit geringem schallisolierenden Materialaufwand angeordnet und betrieben werden, ohne daß das Arbeiten dieser elektrischen Maschinen als störend empfunden wird. Dieser Vorteil läßt sich gut nutzen in Kraftfahrzeugen, die zwecks Brennstoffeinsparung klein ausgebildet werden. Infolge der spielfreien Lagerung der Köcher ist sichergestellt. daß die Kohlebürsten bei laufender Maschine nur wenig Bürstenfeuer erzeugen und dadurch eine lange Laufdauer erreichen und wenig Funkstörungen verursachen.

Die kennzeichnenden Merkmale des Anspruchs 2 ergeben ein Ausführungsbeispiel, das in technisch einfacher Weise herstellbar und dementsprechend preiswürdig ist. Das Ausführungsbeispiel mit den kennzeichnenden Merkmalen des Anspruchs 3 hat den Vorteil, daß der Einsatz besonders elastisch ist und fertigungsbedingte Streuungen in seinen Abmessungen nur einen unerheblichen Einfluß auf die Elastizität der Köcheranordnung haben. Die kennzeichnenden Merkmale des Anspruchs 4 ermöglichen eine preisgünstige Herstellung der Einsätze. Das Ausführungsbeispiel mit den kennzeichnenden Merkmalen des Anspruchs 5 hat den Vorteil, daß durch die Vereinigung des Einsatzes mit dem Köcher die Montage der Kleinmaschine erheblich vereinfacht wird. Die Weiterbildung mit den kennzeichnenden Merkmalen des Anspruchs 6 hat den Vorteil, daß die Einsätze und die Köcher zusätzlich zur vorhandenen axialen Sicherung mittels Reibungskräften noch per Formschluß gesichert sind, wobei sichergestellt ist, daß die Köcher nicht in direkten Kontakt mit der Bürstenhalterplatte kommen können. Das Ausführungsbeispiel mit den kennzeichnenden Merkmalen des Anspruchs 7 hat ebenfalls den Vorteil, daß die Einsätze und die Köcher zusätzlich zu einer Reibschlußsicherung in axialer Richtung auch formschlüssig gesichert sind. Auch bei diesem Ausführungsbeispiel ist es sichergestellt, daß die Köcher nicht in direkten Kontakt mit der Bürstenhalterplatte kommen können, was eine ungedämpfte Übertragung von Vibrationen zur Folge hätte. Die Weiterbildung mit den kennzeichnenden Merkmalen des Anspruchs 8 hat den Vorteil, daß Vibrationen, die von den Kohlebürsten auf die Federn wirken. von den letzteren nur gedämpft auf die Bürstenhalterplatte gelangen können. Die Weiterbildung mit den kennzeichnenden Merkmalen des Anspruchs 9 hat den Vorteil, daß sie die Montage erleichtert.

### Zeichnung

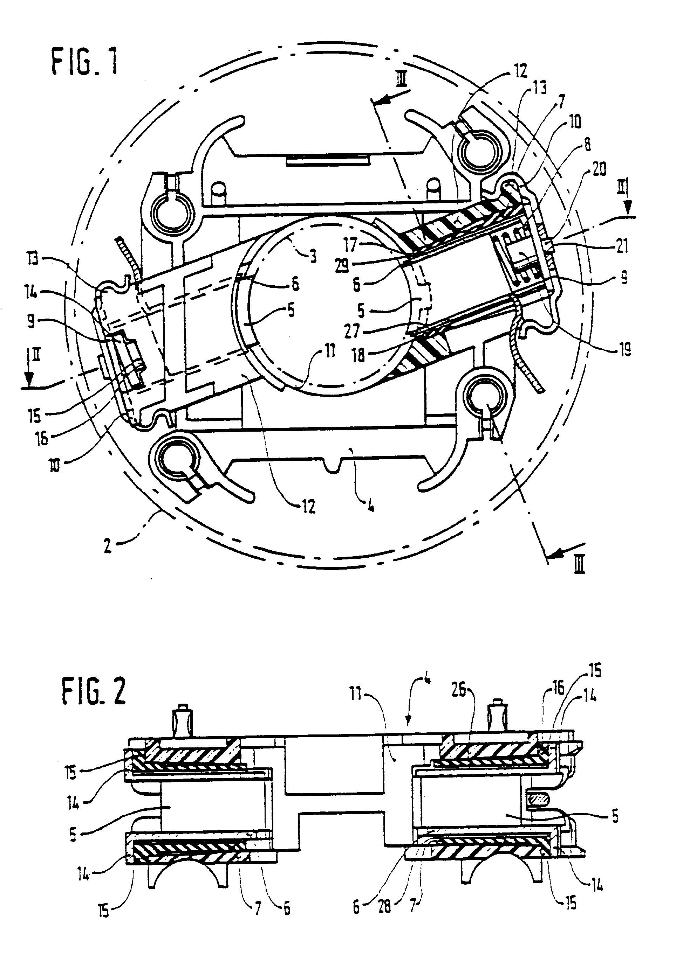

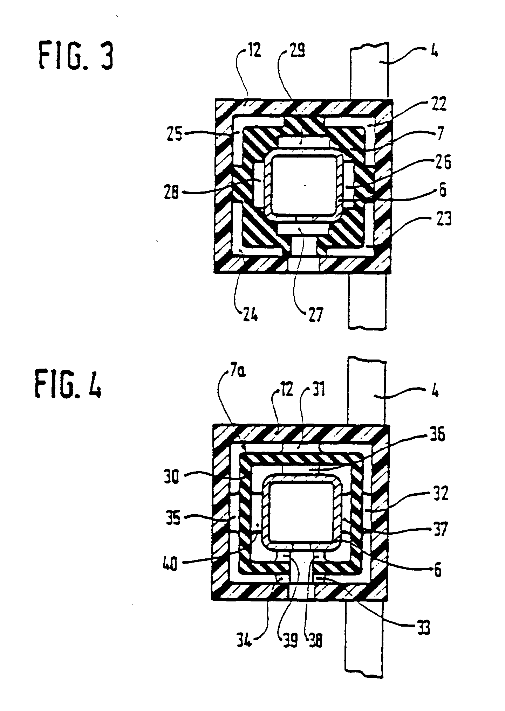

Zwei Ausführungsbeispeile der Erfindung sind in den Zeichnungen dargestellt und in der nachfolgenden Beschreibung näher erläutert. Es zeigen Figur 1 eine Bürstenhalterplatte der erfindungsgemäßen elektrischen Maschine mit kleiner Leistung in der Stirnansicht. Figur 2 die Bürstenhalterplatte gemäß Figur 1 im Längsschnitt. Figur 3 einen Querschnitt durch Einzelteile der Bürstentragerplatte gemäß der Figur 1 in schematisierter Darstellung und Figur 4 ein zweites Ausführungsbeispiel der erfindungsgemäßen elektrischen Maschine.

### Beschreibung der Ausführungsbeispiele

Die elektrische Kleinmaschine bzw. der Kollektormotor 2 hat einen Kollektor 3, eine Bürstenhalterplatte 4, zwei Kohlebürsten 5, zwei Köcher 6 und zwei aus einem gummiartig elastischem Werkstoff bestehende Einsätze 7. zwei Federn 8. zwei aus gummiartig elastischem Werkstoff bestehende Beilageplatten 9 und zwei Kappen 10.

Die Bürstenhalterplatte hat eine zentrale Öffnung 11, innerhalb der sich der Kollektor 3 drehen kann. Angrenzend an diese zentrale Öffnung hat die Bürstenhalterplatte 4 zwei gegen den Kollektor 3 gerichtete Schächte 12. Die Längsachsen dieser Schächte sind so ausgerichtet. daß sie des Kollektors 3 Längsachse in Abständen kreuzen. An ihren von der Öffnung 11 entfernten Enden haben die Schächte 12 nasenartige Ansätze 13. Die Kappen 10 übergreifen diese Ansätze und überspannen die Querschnitte der Schächte 12.

Die Kohlebürsten 5 sind innerhalb der Köcher 6 längsverschiebbar. Die Köcher 6 bestehen vorzugsweise aus Messingblech und haben an ihren den Kappen 10 zugekehrten Enden quer abstehende Flansche 14. Die Einsätze 7, die die Köcher 6 im wesentlichen nach Art von Rechteckrohren umgeben, haben ebenfalls quer abstehende Flansche 15. Diese Flansche 15 befinden sich in Deckung zu den Flanschen 14. Im Bereich der Kappen 10 sind in die Schächte 12 Ausnehmungen 16 eingearbeitet. Die Flansche 15 liegen an diesen Ausnehmungen 16 an. Zwischen diesen Flanschen 15 und den Kappen 10 befinden sich, ausgehend von den Kappen 10, die Beilageplatten 9 und dann die Flansche 14 der Köcher 6. Dadurch halten die Kappen 10 über die Beilageplatten 9 die Köcher 6 und die Einsätze 7 in der in der Figur 1 dargestellten Ausrichtung bezüglich des Kollektors 3. Zusätzlich sind in Richtung des Kollektors 3 die Einsätze 7 mittels im Umfangsbereich der Öffnung 11 angeordneter und in die Querschnitte der Schächte 12 ragender Vorsprünge 17, 18 gesichert. Die Höhe der Vorsprünge 17 und 18 ist kleiner als die Dicke der Einsätze 7, so daß zwischen den Vorsprüngen 17, 18 und den sich durch sie hindurch erstreckenden Köchern 6 Abstände vorhanden sind. Die Federn 8. die die Kohlebürsten 5 gegen den Kollektor 3 drücken, sind zwischen diese Kohlebürsten 5 und Beilageplatten 9 eingesetzt. Zur Zentrierung der Federn 8 haben die Beilageplatten 9 angeformte Zapfen 19. die gegen die Kohlebürsten 5 zeigen. Auf den gegenüberliegenden Seiten der Beilageplatten 9 sind Zentrierzapfen 20 angeformt, die in Löcher 21. die sich in den Kappen 10 befinden eintauchen. Diese Zentrierzapfen 20 sorgen zusammen mit den Kappen 10 dafür, daß die Federn 8 in ihrer Lage gesichert sind und sich über dämpfenden Wirkstoff an der Bürstenhalterplatte 4 abstützen. Dadurch werden Vibrationen, die von den Kohlebürsten 5 auf die an ihnen anliegenden Federn 8 übertragen werden, nicht bzw. nur in einem sehr kleinen Umfang auf die Bürstenhalterplatte 4 weitergeleitet. Die zwischen den Köchern 6 und den Schächten 12 eingesteckten Einsätze 7 dienen ebenfalls dazu, Erschütterungen, die von den Kohlebürsten 5 auf die Köcher 6 übertragen werden, von der Bürstenhalterplatte 4 möglichst gut fernzuhalten. Zu diesem Zweck sind, wie dies in der Figur 3 schematisiert und besonders deutlich dargestellt ist, zwischen den Schächten 12 und den Einsätzen 7 und den Einsätzen 7 und den Köchern 6 Lücken 22 bis 25 und 26 bis 29 angeordnet. Angrenzend an diese Lücken ist der Gesamtquerschnitt der Einsätze 7 aus im wesentlichen rechteckig umgrenzten Einzelquerschnitten zusammenvulkanisiert. Die Einsätze 7 sind bezüglich der lichten Querschnitte zwischen den Schächten 12 und den äußeren Umfängen der Köcher 6 so gestaltet, daß sie in nicht eingebautem Zustand Übermaß haben. Beim Einstecken der Köcher 6 und der Einsätze 7 in die Schächte 12 verformen sie sich die Einsätze 7 elastisch. Dabei weicht der Werkstoff der Einsätze 7 elastisch in Richtung der Lücken 22 bis 25 und 26 bis 29 aus. Dadurch sitzen die Köcher 6 mit gewünschter Vorspannung innerhalb der Schächte 12.

Die dargestellten Lücken 22 bis 29 erstrecken parallel zur Längsrichtung der Köcher 6. Dies muß aber nicht unbedingt so sein. Vielmehr können Lücken auch dadurch zustande gebracht werden, daß man, wie dies in der Figur 4 dargestellt ist, einen Einsatz 7a im wesentlichen nach Art eines Vierkantrohres 30, das sowohl zu dem Köcher 6 als auch zu dem Schacht 12 Abstände hat, ausbildet und an das Vierkantrohr 30 nach auswärts abstehende Noppen 31 bis 35 und nach einwärts abstehende Noppen 36 bis 40 anformt. Die Noppen stehen sich vorzugsweise paarweise einander gegenüber. Eine weitere Abwandlungsmöglichkeit bestünde darin, daß man die Noppen, die nach außen abstehen, relativ zu den einwärts abstehenden Noppen versetzt. Durch Auswahl der Elastizität des Werkstoffs und Bemessung der Noppen 31 bis 40 bzw. der Lükken 22 bis 29 wird die elastische Nachgiebigkeit der Lagerung der Köcher 6 innerhalb der Schächte 12 bestimmt. Es besteht die Möglichkeit, diese Nachgiebigkeit in einer normal zur Längsachse des Kollektors 3 liegenden Bezugsebene anders zu wählen als in quer zu dieser Ebene liegenden weiteren Bezugsebenen.

## Patentansprüche

1. Elektrische Maschine mit kleiner Leistung mit einem einen Kollektor (3) aufweisenden Läufer, mit wenigstens einer in Richtung des Kollektors mittels einer Feder (8) verschiebbaren Kohlebürste (5), mit einem die Kohlebürste (5) führenden Köcher (6), mit einem den Köcher (6) rohrartig wenigstens auf einem Teil seiner Länge im wesentlichen vollständig umgebenden Einsatz (7) aus gummiartig elastischem Werkstoff, mit einer Bürstenhalterplatte (4), die die Einsätze aufnehmende und zum Kollektor (3) gerichtete Schächte hat, und mit die Schächte (12) verschließenden Kappen (10), **dadurch gekennzeichnet, daß** zwischen dem Einsatz (7, 7a, 7b) und diesem benachbarten Bauteilen wie Schächten und Köchern (12, 6) in mehreren Zonen Lücken (22 bis 29) angeordnet sind.

2. Elektrische Maschine nach Anspruch 1, **dadurch gekennzeichnet, daß** der Gesamtquerschnitt des Einsatzes (7, 7b) aus einer Anzahl von Teilquerschnitten, die im wesentlichen rechteckig umgrenzt und nahtlos aneinandergeformt sind, besteht, und daß die benachbarten Bauteile (6, 12) ebenflächig begrenzt sind.

3. Elektrische Maschine nach Anspruch 1, **dadurch gekennzeichnet, daß** der Einsatz (7a) rohrartig ausgebildet ist und abstehende Noppen (31 bis 40) hat.

4. Elektrische Maschine nach Anspruch 2 oder 3, **dadurch gekennzeichnet, daß** der Einsatz (7, 7a, 7b) als Einzelbauteil hergestellt ist.

5. Elektrische Maschine nach einem der Ansprüche 1 bis 4, **dadurch gekennzeichnet, daß** die Schächte (12) an ihren zum Kollektor gerichteten Enden einwärts gerichtete Vorsprünge (17,18) haben, die Axialanschläge für die Einsätze (7, 7a, 7b) bilden und zu den Köchern (6) Abstände aufweisen, und daß zwischen die Einsätze (7, 7a, 7b) und Kappen (10) Beilageplatten (9) aus gummiartig elastischem Werkstoff eingelegt sind und daß die Köcher (6) quer abstehende Flansche (14) haben. die an den Beilageplatten (9) und an den Einsätzen (7, 7a, 7b) anliegen.

6. Elektrische Maschine nach einem der Ansprüche 1 bis 4, **dadurch gekennzeichnet, daß** die Kocher (6) an ihren bei den Kappen (10) befindlichen Enden quer abstehende Flansche (14) haben, daß zwischen diese Flansche (14) und die Kappen (10) Beilageplatten (9) aus gummiartig elastischem Werkstoff eingelegt sind, und daß die Einsätze (7 7a, 7b) ebenfalls quer abstehende Flansche (15) besitzen, die in Deckung zu den Flanschen (14) der Köcher (6) ausgerichtet sind und an diesen anliegen und in Richtung des Kollektors (3) in Ausnehmungen (16), die quer zu den Schächten (12) ausgerichtet sind, anliegen, wobei diese Ausnehmungen (16) Axialanschläge für die Einsätze (7, 7a, 7b) und auch die Köcher (6) bilden.

7. Elektrische Maschine nach Anspruch 5 oder 6, **dadurch gekennzeichnet, daß** die Beilageplatten (9) gegen die Kohlebürsten (5) gerichtete und die Federn (8) zentrierende Zapfen (19) haben.

8. Elektrische Maschine nach Anspruch 5 oder 6, **dadurch gekennzeichnet, daß** die Beilageplatten (9) Zentrierzapfen (20) haben, die in in die Kappen (10) eingearbeitete Löcher (21) hineinragen.

## Claims

1. Electrical machine of low power with a rotor having a commutator (3), with at least one carbon brush (5) displaceable by means of a spring (8) in the direction of the commutator, with a cartridge (6) guiding the carbon brush (5), with an insert (7) of elastomeric material substantially completely surrounding the cartridge (6) in tubular manner at least over part of its length, with a brush holder plate (4) which has shafts accommodating the inserts and directed toward the commutator (3), and with caps (10) closing off the shafts (12), **characterized in that** gaps (22 to 29) are arranged in several zones between the insert (7, 7a, 7b) and components neighbouring the latter such as shafts and cartridges (12, 6).

2. Electrical machine according to Claim 1, **characterized in that** the overall cross-section of the insert (7, 7b) consists of a number of partial cross-sections which are defined substantially rectangularly and formed continuously one against the other, and **in that** the neighbouring components (6, 12) are limited by a plane surface.

3. Electrical machine according to Claim 1, **characterized in that** the insert (7a) is designed in a tubular manner and has protruding dimples (31 to 40).

4. Electrical machine according to Claim 2 or 3, **characterized in that** the insert (7, 7a, 7b) is made as an individual component.

5. Electrical machine according to one of Claims 1 to 4, **characterized in that** the shafts (12) have, at their ends directed toward the commutator, inwardly directed projections (17, 18), which form axial stops for the inserts (7, 7a, 7b) and have distances from the cartridges (6), and **in that** shims (9) of elastomeric material are fitted between the inserts (7, 7a, 7b) and the caps (10), and **in that** the cartridges (6) have transversely protruding flanges (14), which bear against the shims (9) and the inserts (7, 7a, 7b).

6. Electrical machine according to one of Claims 1 to 4, **characterized in that** the cartridges (6) have transversely protruding flanges (14) at their ends located at the caps (10), **in that** shims (9) of elastomeric material are fitted between these flanges (14) and the caps (10), and **in that** the inserts (7, 7a, 7b) likewise have transversely protruding flanges (15) which are aligned congruent to the flanges (14) of the cartridges (6) and bear against the latter and, in the direction of the commutator (3) rest in recesses (16) which are aligned transverse to the shafts (12), these recesses (16) forming axial stops for the inserts (7, 7a, 7b) and also the cartridges (6).

7. Electrical machine according to Claim 5 or 6, **characterized in that** the shims (9) have pins (19) directed against the carbon brushes (5) and centering the springs (8).

8. Electrical machine according to Claim 5 or 6, **characterized in that** the shims (9) have centering pins (20), which protrude into holes (21) made in the caps (10).

## Revendications

1. Machine électrique de petite puissance comportant un rotor qui présente un collecteur (3), comportant au moins un balai de charbon (35) qui peut coulisser en direction du collecteur au moyen d'un ressort (8), comportant un fourreau (6) qui guide le balai de charbon (5), comportant une garniture (7), en matériau à élasticité type caoutchouc, qui entoure essentiellement complètement le fourreau (6) à la façon d'un tube au moins sur une partie de sa longueur, comportant une plaque-porte-balais (4) qui présente des puits qui logent les garnitures qui sont dirigés vers le collecteur (3), et comportant des chapeaux (10) qui obturent les puits (12), **caractérisée en ce qu'**entre la garniture (7, 7a, 7b) et les pièces qui lui sont voisines, comme les puits et les fourreaux (12, 6) sont disposés en plusieurs zones des vides (22 à 29).

2. Machine électrique selon la revendication 1, **caractérisée en ce que** la section totale de la garniture (7, 7b) est constituée d'un certain nombre de sections partielles dont le contour est essentiellement rectangulaire et qui sont venues de forme l'une à côté de l'autre sans joint ; et **en ce que** les éléments voisins (6, 12) sont limités bien à plat.

3. Machine électrique selon la revendication 1, **caractérisée en ce que** la garniture (7a) a la forme d'un tube et présente des bossages qui s'en détachent (31 à 40).

4. Machine électrique selon la revendication 2 ou 3, **caractérisée en ce que** la garniture (7, 7a, 7b) est fabriquée sous forme de composant individuel.

5. Machine électrique selon l'une des revendications 1 à 4, **caractérisée en ce que** les puits (12) présentent, à leurs extrémités dirigées vers le collecteur, des saillies (17, 18) qui sont dirigées vers l'intérieur, qui forment des butées axiales pour les garnitures (7, 7a, 7b) et qui présentent une certaine distance par rapport aux fourreaux (6) ; et **en ce qu'**entre les garnitures (7, 7a, 7b) et les chapeaux (10) sont interposées des rondelles de calage (9) en matériau élastique du type caoutchouc ; et **en ce que** les fourreaux (6) présentent des rebords (14) qui s'en détachent transversalement et s'appuient contre les rondelles de calage (9) et les garnitures (7, 7a, 7b).

6. Machine électrique selon l'une des revendications 1 à 4, **caractérisée en ce que** les fourreaux (6) présentent, à leurs extrémités qui se trouvent près des chapeaux (10), des rebords (14) qui s'en détachent transversalement ; **en ce qu'**entre ces rebords (14) et les chapeaux (10) sont interposées des rondelles de calage (9) en matériau élastique du type caoutchouc ; et **en ce que** les garnitures (7, 7a, 7b) présentent également des rebords (15) qui s'en détachent transversalement, qui sont alignés de façon à venir recouvrir les rebords (14) des fourreaux (6) et s'appuient contre ceux-ci et, en direction du collecteur (3), s'appuient dans des évidements (16) qui sont alignés transversalement par rapport aux puits (12), étant précisé que ces évidements (16) forment des butées axiales pour les garnitures (7, 7a, 7b) et également pour les fourreaux (6).

7. Machine électrique selon la revendication 5 ou 6, **caractérisée en ce que** les rondelles de calage (9) présentent des tétons (19) qui sont dirigés vers les balais (5) et qui centrent les ressorts (8).

8. Machine électrique selon la revendication 5 ou 6, **caractérisée en ce que** les rondelles de calage (9) présentent des tétons de centrage (20) qui pénètrent dans des trous (21) urinés dans les chapeaux (10).
